(19) Europäisches Patentamt
European Patent Office
Office européen des brevets

(11) Veröffentlichungsnummer: **0 497 102 A2**

(12) # EUROPÄISCHE PATENTANMELDUNG

(21) Anmeldenummer: **92100252.3**

(22) Anmeldetag: **09.01.92**

(51) Int. Cl.[5]: **C08F 4/68**, C08F 4/634, C08F 10/02

(30) Priorität: **26.01.91 DE 4102300**

(43) Veröffentlichungstag der Anmeldung: **05.08.92 Patentblatt 92/32**

(84) Benannte Vertragsstaaten: **AT BE DE ES FR GB IT NL SE**

(71) Anmelder: **BASF Aktiengesellschaft**
**Carl-Bosch-Strasse 38**
**W-6700 Ludwigshafen(DE)**

(72) Erfinder: **Bueschges, Ulrich, Dr.**
**Mandelring 5**
**W-6706 Wachenheim(DE)**
Erfinder: **Saive, Roland, Dr.**
**Pfarrer-Friedrich-Strasse 44**
**W-6700 Ludwigshafen(DE)**
Erfinder: **Funk, Guido, Dr.**
**Duererstrasse 5**
**W-6520 Worms 1(DE)**

(54) **Vanadium und Magnesium enthaltende Komponente für ein Ziegler-Katalysatorsystem.**

(57) Eine neue Vanadium und Magnesium enthaltende Komponente für ein Ziegler-Katalysatorsystem ist erhältlich, indem man entweder

(1) mindestens eine näher bezeichnete halogenhaltige Magnesiumverbindung und/oder ein Magnesiumacetylacetonat und mindestens eine näher bezeichnete Vanadiumverbindung, welche alle in organischen Lösungsmitteln löslich sind,

(2) mindestens eine näher bezeichnete, in organischen Lösungsmitteln lösliche halogenhaltige Vanadiummagnesiumverbindung oder

(3) ein Gemisch aus der halogenhaltigen Vanadiummagnesiumverbindung sowie der halogenhaltigen Magnesiumverbindung, dem Magnesiumacetylacetonat und/oder der Vanadiumververbindung

nacheinander in beliebiger Reihenfolge oder gleichzeitig in Substanz oder aus Lösung(en) auf einen festen, feinteiligen, inerten organischen oder anorganischen Träger aufträgt. Die anwendungstechnischen Eigenschaften der neuen Komponente können durch Auftragen von Titan-, Organobor- und/oder Organosiliciumverbindung weiter modifiziert und sehr breit variiert werden. Die neuen Ziegler-Katalysatorsysteme, welche unter Verwendung der neuen Vanadium und Magnesium enthaltenden Komponente herstellbar sind, liefern in hervorragenden Ausbeuten hochdichte Ethylenhomo- und -copolymerisate mit ausgesprochen breiten Molekulargewichtsverteilungen, welche außerdem noch ganz gezielt eingestellt werden können.

EP 0 497 102 A2

Die vorliegende Erfindung betrifft eine neue Vanadium und Magnesium enthaltende Komponente für ein Ziegler-Katalysatorsystem, welche dadurch erhältlich ist, daß man mindestens eine Magnesiumverbindung und mindestens eine Vanadiumverbindung nacheinander in beliebiger Reihenfolge oder gleichzeitig aus Lösung(en) oder in Substanz auf einen festen, feinteiligen, inerten organischen oder anorganischen Träger aufträgt.

Des weiteren betrifft die vorliegende Erfindung das neue Ziegler-Katalysatorsystem,welches die neue Vanadium und Magnesium enthaltende Komponente enthält.

Nicht zuletzt betrifft die vorliegende Erfindung Ethylenhomo- und -copolymerisate, welche unter Verwendung des neuen Ziegler-Katalysatorsystems durch Homopolymerisation von Ethylen oder Copolymerisation von Ethylen mit untergeordneten Mengen an $C_3$- bis $C_8$-$\alpha$-Monoolefinen bei Temperaturen von 30 bis 200 °C und einem Druck von 0,1 bis 200 bar herstellbar sind.

Homo- und Copolymerisationsverfahren dieser Art sind allgemein bekannt und werden beispielsweise in der US-A-4 578 374, der EP-A-0 057 589, der EP-A-0 055 589 und der EP-A-0 166 888 beschrieben.

Hierbei macht das in der US-A-4 578 374 beschriebene Polymerisationsverfahren von einem Ziegler-Katalysatorsystem Gebrauch, welches dadurch herstellbar ist, daß man einen festen, feinteiligen inerten Träger in einem inerten Lösungsmittel nacheinander mit

1. einer halogenfreien organischen Magnesiumverbindung wie Diethyl-, Dipropyl-, Di-isopropyl-, Di-n-butyl-, Di-isobutyl-, Diamyl-, Dioctyl-, Di-n-hexyl-, Didecyl-, Didodecyl-, Dicyclohexyl-, Dibenzyl-, Ditolyl-, Dixylyl-, Ethylpropyl-, Ethyl-n-butyl-, Amylhexyl- und n-Butyl-sec.-butylmagnesium, welche allesamt noch geringe Mengen an organischen Aluminiumverbindungen wie Triethylaluminium enthalten können,
2. gegebenenfalls Alkoholen, Ketonen und Aldehyden wie 1-Butanol, Aceton und Acetaldehyd,
3. gegebenenfalls halogenfreien Siloxanen wie Hexamethyl-, Octamethyltri-, Octamethylcyclotetra-, Decamethylcyclopentasiloxan u.a.,
4. einer Vanadiumverbindung wie Vanadyltrichlorid, Vanadiumtetrachlorid, Tetrabutoxyvanadium, Vanadiumtrichlorid, Vanadylacetylacetonat, Vanadiumacetylacetonat, Vanadyldichloroacetylacetonat, Vanadiumtrichlorid, komplexiert mit Tetrahydrofuran, Vanadylchlorodiacetylacetonat, Vanadyltribromid und Vanadiumtetrabromid und
5. Halogeniden von Metallen der 3. Hauptgruppe des periodischen Systems der Elemente wie Bortrichlorid, Ethylaluminiumdichlorid und Ethylbordichlorid

behandelt und die hierbei erhaltene Vanadium und Magnesium enthaltende Katalysatorkomponente mit Cokatalysatoren wie Aluminiumalkylen, Aluminiumalkylhydriden, Lithiumaluminiumalkylen, Zinkalkylen und Magnesiumalkylen sowie mit Aktivatoren wie organischen Halogenverbindungen umsetzt.

Demgegenüber wird bei dem Polymerisationsverfahren der EP-A-0 057 589 ein Ziegler-Katalysatorsystem verwendet, welches man durch

1. Behandeln eines anorganischen oxidischen Trägers, welcher in seiner Oberfläche Hydroxylgruppen aufweist, mit halogenhaltigen Übergangsmetallverbindungen wie Titantetrachlorid, Trichlortitanethylat, Dichlortitandiisopropylat, Titanoxychlorid, Vanadyltrichlorid, Vanadiumtetrachlorid, Zirkoniumtetrachlorid, Zirkonylchlorid und Chromylchlorid,
2. Umsetzen des hierbei erhaltenen Produktes mit Aluminium-, Bor-, Lithium-, Zink-, Magnesium-, Silicium- und Zinnverbindungen wie Triethylaluminium, Triisopropylaluminium, Diethylaluminiumchlorid, Diethylaluminiumethoxid, Triethylbor, Trimethylsilylchlorid, Tributylzinnhydrid, Dibutylmagnesium, Ethylmagnesiumbromid, Diethylzink und Butyllithium und
3. Umsetzen des hierbei erhaltenen Produkts mit einer Vanadiumverbindung wie Vanadyltrichlorid, Vanadiumtetrachlorid und Vanadyltriethylat,

erhält.

Diesem Ziegler-Katalysatorsystem können gleichfalls die üblichen und bekannten Cokatalysatoren wie beispielsweise Triethylaluminium zugesetzt werden.

Die beiden vorstehend genannten Verfahren erlauben die Herstellung von Ethylenhomopolymerisaten und -copolymerisaten mit $\alpha$-Monoolefinen. Indes reicht die Produktivität der hierbei verwendeten Ziegler-Katalysator-Systeme für die Herstellung von hochmolekularen, hochdichten Ethylenhomopolymerisaten und -copolymerisaten mit breiter Molmassenverteilung nicht aus. Außerdem läßt sich die Molmassenverteilung nicht breit variieren.

Gleiches gilt für das aus der EP-A-0 055 589 bekannte Polymerisationsverfahren, bei welchem von einem Ziegler-Katalysatorsystem Gebrauch gemacht wird, das durch die Reaktion eines feinteiligen anorganischen Oxides mit

1. entweder einer kohlenwasserstofflöslichen organischen Magnesiumverbindung, wie Di-sec.-butyl-, Di-tert.-butyl-, Ethyl-n-butyl-, n-Butyl-sec.-butyl-, n-Butyl-tert.-butyl-, Ethyl-n-hexyl-, Ethyl-n-octyl-, Di-n-hexyl-, Di-n-octyl- und Di-n-decylmagnesium und das Reaktionsprodukt von Di-n-butylmagnesium und

Triethylaluminium, oder den Umsetzungsprodukten der vorstehend genannten organischen Magnesiumverbindungen mit Elektronendonoren wie Ether, Thioether, Ketone, Aldehyde, Carbonsäuren und ihre Derivate, Alkohole, Thioalkohole und Amine,

2. einem Chlorsilan wie Trichlorsilan, Methyldichlorsilan, Ethyldichlorsilan, Benzyldichlorsilan, Methylchlorsilan, Dimethylchlorsilan, Methyl-isopropylchlorsilan und Diphenylchlorsilan und

3. einer halogenhaltigen Titan- und/oder Vanadiumverbindung wie Titantetrachlorid, Titantetrabromid, Titantetrajodid, Ethoxytitantrichlorid, Propoxytitantrichlorid, Butoxytitantrichlorid, Dipropoxytitandichlorid, Dibutoxytitandichlorid, Tripropoxytitanmonochlorid, Tributoxytitanmonochlorid, Vanadiumtetrachlorid, Vanadyltrichlorid, Monobutoxyvanadyldichlorid, Dibutoxyvanadylmonochlorid und Dibutoxyvanadyldichlorid

sowie durch Behandeln des hierbei resultierenden Produktes mit üblichen und bekannten Cokatalysatoren und Aktivatoren hergestellt wird.

Das in der EP-A-0 166 888 beschriebene Verfahren verwendet ein Ziegler-Katalysatorsystem, welches durch Auftragen eines Vanadiumtrihalogenid-Alkohol-Komplexes, eines Titantrihalogenids oder -trihalogenidkomplexes sowie gegebenenfalls eines Zirkontetrahalogenids auf einem anorganischen oxidischen Träger und Behandeln des hierbei resultierenden Produktes mit den üblichen und bekannten Cokatalysatoren und Aktivatoren erhalten wird. Dieses Ziegler-Katalysatorsystem gestattet die Herstellung von Ethylenhomopolymerisaten und -copolymerisaten mit einstellbarer breiter Molmassenverteilung und guter Kornbeschaffenheit, wobei es eine gute Produktivität aufweist. Indes weist es bei der Herstellung von mittelmolekularen und mitteldichten Ethylencopolymerisaten erhebliche Nachteile auf: so ist der Comonomerbedarf vergleichsweise hoch, und es kann unter den anzuwendenden Reaktionsbedingungen vermehrt zu dem sogenannten "reactor-fouling" kommen, worunter die Bildung von Wandbelag im Reaktor zu verstehen ist.

Außerdem läßt bei all den vorstehend genannten Copolymerisationsverfahren die Verteilung der Comonomeren in den Ethylencopolymerisaten noch deutlich zu wünschen übrig und ist zum Teil auch nicht gezielt einstellbar.

Dieser Nachteil kann bis zu einem gewissen Grade durch die aus der EP-A-0 129 312, der EP-A-0 237 294 oder der US-A-4 128 607 beschriebenen Verfahren überwunden werden, indes sind diese Verfahren zweistufig ausgelegt und benötigen verfahrenstechnisch aufwendige Reaktorkaskaden.

So wird beispielsweise bei dem Verfahren der EP-A-0 237 294 in der ersten Stufe von einem Phillips-Katalysatorsystem und in der zweiten Stufe von einem Magnesium und Titan enthaltenden Ziegler-Katalysatorsystem Gebrauch gemacht. Zu dessen Herstellung können Titanverbindungen auf metallisches Magnesium, Magnesiumhydroxid, Magnesiumcarbonat, Magnesiumoxid und Magnesiumchlorid sowie auf Doppelsalze und -oxide des Magnesiums mit Silicium, Aluminium und Calzium aufgetragen werden, oder es können magnesiumorganische Verbindungen wie Grignard-Verbindungen oder Umsetzungsprodukte von magnesiumorganischen Verbindungen mit natrium-, lithium-, kalium-, bor- und zinkorganischen Verbindungen mit Titanverbindungen umgesetzt werden.

Bei dem zweistufigen Verfahren der EP-A-0 129 312 wird ebenfalls in der einen Stufe ein Phillips-Katalysatorsystem und in der anderen Stufe ein Ziegler-Katalysatorsystem verwendet, welches man aus jedweden organischen und anorganischen Magnesiumverbindungen herstellen kann. Als Beispiele werden Magnesiumchlorid, Hydroxymagnesiumchlorid, Magnesiumoxid, Magnesiumhydroxid, Magnesiumcarbonat, Magnesiumalkoxide, Magnesiumsalze organischer Säuren oder Magnesiumkomplexe mit Elektronendonorverbindungen wie Alkohole oder Carbonsäureester, magnesiumorganische Verbindungen mit einer Kohlenstoff-Magnesium-Bindung wie Dialkylmagnesium, Alkylmagnesiumchlorid, Alkylmagnesiumalkoxide, Alkylmagnesiumsiloxide oder deren Komplexe mit den vorstehend genannten Elektronendonorverbindungen sowie Reaktionsprodukte der vorstehend genannten Organomagnesiumverbindungen und einer Halogenverbindung wie Salzsäure, organische Halogenverbindungen, Chlorsilane, Siliciumtetrachlorid und Zinntetrachlorid. Des weiteren wird für die Herstellung des Ziegler-Katalysatorsystems eine Halogen enthaltende Vanadiumverbindung sowie gegebenenfalls noch Halogenide von Aluminium, Bor, Silicium, Germanium, Zinn, Beryllium und/oder Antimon verwendet.

Ferner ist noch aus der US-A-4 128 607 ein mehrstufiges Verfahren bekannt, bei welchem man ein titanhaltiges Ziegler-Katalysatorsystem mit Magnesiumverbindungen oder Reaktionsprodukten von Magnesiumverbindungen mit Aluminiumverbindungen als feinteiligem Träger verwendet.

Trotz dieses verfahrenstechnischen Aufwands müssen die nach den bekannten mehrstufigen Verfahren erhaltenen Ethylenhomopolymerisate und -copolymerisate in ihrem anwendungstechnischen Eigenschaftsprofil weiter verbessert werden. So wäre es für die einfache und zuverlässige Herstellung von Formteilen durch das Blasextrusionsverfahren notwendig, Ethylenhomopolymerisate und -copolymerisate zur Verfügung zu haben, welche die Eigenschaftskombination hohe Schockzähigkeit, hohe Spannungsrißbeständigkeit, hohe Steifigkeit und glatte Oberflächenbeschaffenheit aufweisen und darüberhinaus nur geringe Mengen an

kohlenwasserstofflöslichen Anteilen enthalten. Des weiteren sollten diese Ethylenhomopolymerisate und -copolymerisate ein gutes Fließvermögen aufweisen, damit eine wirtschaftliche Verarbeitbarkeit möglich ist. Die Steigerung des Fließvermögens darf indes keine sonstigen Nachteile bei der Verarbeitung wie etwa die sogenannte Strangaufweitung zur Folge haben.

Die bei der Schlauchfolienherstellung verwendeten Ethylencopolymerisate sind hinsichtlich der Fließfähigkeit und des ruhigen Schlauchlaufs gleichfalls verbesserungswürdig. Auch sollten die hierbei erhaltenen Folien in ihrer Klebneigung, ihrem Gelgehalt und ihrer Zähigkeit bei gleichzeitig vorhandener papierähnlicher Steifigkeit weiter verbessert werden.

Aufgabe der vorliegenden Erfindung ist es, eine neue Vanadium und Magnesium enthaltende Komponente für ein Ziegler-Katalysatorsystem zur Verfügung zu stellen, welche es gestattet, neue hochproduktive Ziegler-Katalysatorsysteme zu entwickeln, die Ethylenhomopolymerisate und -copolymerisate mit gezielt einstellbarer Molmasse und Molmassenverteilung sowie im Falle der Copolymerisate mit ausgewogener Comonomerenverteilung, guter Verarbeitbarkeit, guter Kornbeschaffenheit, hoher Beständigkeit gegenüber Spannungsrißkorrosion und mit geringem Gehalt an kohlenwasserstofflöslichen Anteilen liefern, ohne daß hierbei auf mehrstufige Verfahren zurückgegriffen werden muß. Außerdem sollen die mit Hilfe dieses neuen Ziegler-Katalysatorsystems hergestellten Ethylenhomopolymerisate und -copolymerisate eine besonders gute Blasenstabilität beim Folienblasprozeß aufweisen, und die hergestellten Folien sollen von hoher mechanischer Festigkeit, papierähnlicher Steifigkeit und äußerst geringem Gelgehalt sein. Nicht zuletzt sollen die betreffenden Ethylenhomopolymerisate und -copolymerisate beim Blasextrusionsverfahren in einfacher und zuverlässiger Weise einwandfreie Fertig- und Formteile mit glatter Oberfläche und guter Wanddickenverteilung liefern. Darüber hinaus sollen die neuen Ziegler-Katalysatorsysteme bei der Herstellung dieser vorteilhaften Ethylenhomopolymerisate und -copolymerisate das sogenannte "reactor-fouling" verhindern.

Überraschenderweise hat eine neue Vanadium und Magnesium enthaltende Komponente für ein Ziegler-Katalysatorsystem die Lösung der Aufgabe ermöglicht, welche der vorliegenden Erfindung zugrundeliegt. Im Hinblick auf den Stand der Technik war es nicht zu erwarten, daß ausgerechnet die neue Vanadium und Magnesium enthaltende Komponente, welche erhältlich ist, indem man entweder

(1) mindestens eine halogenhaltige Magnesiumverbindung und/oder ein Magnesiumacetylacetonat und mindestens eine Vanadiumverbindung, welche alle in organischen Lösungsmitteln löslich sind,

(2) mindestens eine in organischen Lösungsmitteln lösliche halogenhaltige Vanadiummagnesiumverbindung oder

(3) ein Gemisch aus der halogenhaltigen Vanadiummagnesiumverbindung sowie der halogenhaltigen Magnesiumverbindung, dem Magnesiumacetylacetonat und/oder der Vanadiumververbindung

auf einen festen, feinteiligen, inerten organischen oder anorganischen Träger aufträgt, die Nachteile der bisher bekannten Verfahren überwindet. Hierbei war es insbesondere überraschend, daß das neue, auf der neuen Vanadium und Magnesium enthaltenden Komponente basierende Ziegler-KatalysatorsystemEthylenhomopolymerisate und -copolymerisate von vorzüglichem anwendungstechnischem Eigenschaftsprofil liefert, ohne daß dabei auf mehrstufige Polymerisationsverfahren zurückgegriffen werden muß.

Demgemäß handelt es sich bei dem Gegenstand der vorliegenden Erfindung um eine Vanadium und Magnesium enthaltende Komponente für ein Ziegler-Katalysatorsystem, welches herstellbar ist, indem man mindestens eine Magnesiumverbindung und mindestens eine Vanadiumverbindung nacheinander in beliebiger Reihenfolge oder gleichzeitig aus Lösung(en) oder in Substanz auf einen festen, feinteiligen, inerten organischen oder anorganischen Träger aufträgt, und welche dadurch gekennzeichnet ist, daß man hierbei

(1) mindestens eine Magnesiumverbindung der allgemeinen Formel I

$$Mg_aX_bY_cZ_d \quad (I),$$

worin die Indices und die Variablen die folgende Bedeutung haben:

- X Chlor und Brom,
- Y Wasserstoff und Hydroxyl-, Alkyl-, Cycloalkyl-, Aryl-, Alkoxy-, Cycloalkoxy- und Aryloxyrest,
- Z Alkohol, Ether, Aldehyd, Ester, Keton, Amin und organisches Phosphin,
- a,b ganze Zahlen $\geqq 1$,
- c 0 und ganze Zahl $\geqq 1$,
- d 0 oder eine ganze Zahl von 1 bis 6,

mit den Maßgaben:

(i) $b + c = 2a$ und

(ii) $d \neq 0$, wenn $c = 0$;

sowie mindestens eine Vanadiumverbindung der allgemeinen Formeln IIa bis IIf,

$VOX_3$ (IIa)

$VX_4$ (IIb)

$VX_3Z^1{}_d$ (IIc)

$[VX_3Z^1{}_d]_e \cdot (Mg_aX_bY_cZ_d)_{1-e}$ (IId)

$(VOX_{3-f}Y^1_f)_e \cdot (M_gX_hY^1_i Z^2_d)_{1-e}$ (IIe)

$(VX_{4-j}Y^1_j)_e \cdot (M_gX_hY^1_i Z^2_d)_{1-e}$ (IIf)

worin die Variablen X, Y, Z und R sowie der Index d die bei der allgemeinen Formel I angegebene Bedeutung und die übrigen Indices und Variablen die nachstehend angegebene Bedeutung haben:

- M Kation eines Metalls der 2. und 3. Hauptgruppe des periodischen Systems der Elemente, ausgenommen Magnesium,
- $Y^1$ Alkyl-, Cycloalkyl-, Aryl-, Alkoxy-, Cycloalkoxy- und Aryloxyrest,
- $Z^1$ Alkohol,
- $Z^2$ Ether, tertiäres Amin und tertiäres Phosphin,
- e 0 2 $\leqq$ e < 1,
- f 1, 2 und 3,
- j 1, 2, 3 und 4,
- g,h ganze Zahlen $\geqq$ 1,
- i 0 und ganze Zahl $\geqq$ 1,

mit der Maßgabe,

(iii) $h + i = g \cdot$ (Oxidationszahl von M);

oder

(2) mindestens eine Vanadiummagnesiumverbindung der allgemeinen Formeln IIIa bis IIIc,

$[VX_3Z^1{}_d]_e \cdot (Mg_aX_bY_cZ_d)_{1-e}$ (IIIa)

$(VOX_{3-f}Y^1_f)_e \cdot (Mg_aX_bY^1_c Z^2_d)_{1-e}$ (IIIb)

$(VX_{4-j}Y^1_j)_e \cdot (Mg_aX_bY^1_c Z^2_d)_{1-e}$ (IIIc)

worin die Variablen X, Y, Z, R, $Y^1$ und $Z^1$ sowie die Indices a, b, c, d, e, f und j die vorstehend angegebene Bedeutung haben;

oder

(3) mindestens eine Vanadiummagnesiumverbindung der allgemeinen Formeln IIIa bis IIIc zusammen mit mindestens einer Magnesiumverbindung der allgemeinen Formel I, mindestens einem Magnesiumacetylacetonat und/oder mindestens einer Vanadiumverbindung der allgemeinen Formeln IIa bis IIf

verwendet.

Ein weiterer Gegenstand der vorliegenden Erfindung ist das neue Ziegler-Katalysatorsystem, welches durch Vermischen

(1) mindestens einer der neuen Vanadium und Magnesium enthaltenden Komponente mit

(2) mindestens einer aluminiumorganischen Verbindung und

(3) mindestens einem organischen Cokatalysator

resultiert.

Nicht zuletzt sind Ethylenhomopolymerisate und -copolymerisate mit untergeordneten Mengen an einpolymerisierten $C_3$- bis $C_8$-$\alpha$-Monoolefinen, welche unter Verwendung des neuen Ziegler-Katalysatorsystems hergestellt worden sind, ein weiterer Gegenstand der vorliegenden Erfindung.

Im folgenden wird die neue Vanadium und Magnesium enthaltende Komponente für ein Ziegler-Katalysatorsystem der Kürze halber als "erfindungsgemäße Komponente" bezeichnet. Aus dem selben Grunde wird das neue Ziegler-Katalysatorsystem, welches mit Hilfe der erfindungsgemäßen Komponente hergestellt wird, als "erfindungsgemäßer Katalysator" bezeichnet.

Die erfindungsgemäße Komponente ist herstellbar, indem man - kurz gesagt - mindestens eine Magnesiumverbindung und mindestens eine Vanadiumverbindung nacheinander in beliebiger Reihenfolge oder gleichzeitig aus Lösung(en) oder in Substanz auf einen festen, feinteiligen, inerten organischen oder anorganischen Träger aufträgt. Erfindungsgemäß wird hierfür eine Magnesiumverbindung der allgemeinen

Formel I verwendet, d.h., die Magnesiumverbindung der allgemeinen Formel I ist ein erfindungsgemäß wesentlicher Ausgangsstoff für die erfindungsgemäße Komponente.

In der allgemeinen Formel I steht die Variable X für Chlor und Brom. Erfindungsgemäß ist Chlor von Vorteil.

In der allgemeinen Formel I steht die Variable Y für Wasserstoff oder für Hydroxyl-, Alkyl-, Cycloalkyl-, Aryl-, Alkoxy-, Cycloalkoxy- oder Aryloxyreste.

Beispiele erfindungsgemäß geeigneter Alkyl-, Cycloalkyl-, Aryl-, Alkoxy- oder Aryloxyreste sind Methyl-, Ethyl-, Propyl-, Isopropyl-, n-Butyl-, sec.-Butyl-, tert.-Butyl-, n-Pentyl-, Isopentyl-, Neopentyl-, Hexyl-, Heptyl-, Octyl-, Isooctyl-, Benzyl-, Cyclopentyl-, Cyclohexyl-, 4-Methyl-cyclohexyl-, Phenyl-, Naphthyl-, Biphenylyl-, p-Methylphenyl-, Methoxy-, Ethoxy-, Propoxy-, Isopropoxy-, n-Butoxy-, sec.-Butoxy-, tert.-Butoxy-, n-Pentoxy-, Isopentoxy-, Neopentoxy-, Hexoxy-, Octoxy-, Isooctoxy-, Benzyloxy-, Cyclopentoxy-, Cyclohexoxy-, 4-Methylcyclohexoxy-, Phenoxy-, Naphthoxy-, 4-Phenyl-phen-1-oxy- und p-Methylphenoxyreste, von denen Ethoxy-, Propoxy- und n-Butoxyreste erfindungsgemäß vorteilhaft sind und deshalb bevorzugt verwendet werden.

In der allgemeinen Formel I steht die Variable Z für einen Alkohol, einen Ether, einen Aldehyd, einen Ester, ein Keton, ein Amin oder ein tertiäres Phosphin.

Beispiele geeigneter Alkohole sind Methanol, Ethanol, n-Propanol, Isopropanol, n-Butanol, Butan-2-ol, Amylalkohol, n-Hexanol, Octanol, Cyclohexanol, Glykol, Propan-1,2-diol und Butan-2,3-diol, von denen Methanol, Ethanol, Isopropanol und Glykol erfindungsgemäß vorteilhaft sind und deshalb bevorzugt verwendet werden.

Beispiele geeigneter Ether sind Diethylether, Tetrahydrofuran, Dioxan, Diethylenglykoldimethylether, Diethylenglykoldiethylether, Di-n-butylether, n-Butylmethylether und Anisol, von denen Tetrahydrofuran und Dioxan erfindungsgemäß von Vorteil sind und deshalb bevorzugt verwendet werden.

Beispiele geeigneter Aldehyde sind Formaldehyd, Acetaldehyd, Propionaldehyd und Benzaldehyd, von denen Acetaldehyd erfindungsgemäß von Vorteil ist und deshalb bevorzugt verwendet wird.

Beispiele geeigneter Ketone sind Aceton, Methylethylketon, Methylbutylketon, Acetophenon und Benzophenon, von denen Aceton erfindungsgemäß vorteilhaft ist und deshalb bevorzugt verwendet wird.

Beispiele geeigneter Ester sind Methyl-, Ethyl- und n-Propylformiat, Methyl-, Ethyl-, n-Propyl-, n-Butyl- und n-Pentylacetat, Methyl-, Ethyl- und n-Propylpropionat sowie Methyl- und Ethylbenzoat, von denen Methyl- und Ethylacetat erfindungsgemäß von Vorteil sind und deshalb bevorzugt verwendet werden.

Beispiele geeigneter Amine sind Dimethyl-, Diethyl-, Di-n-propyl-, Di-n-butyl-, Dicyclohexyl-, Dibenzyl-, Diphenyl-, Trimethyl-, Triethyl-, Tri-n-propyl-, Tri-n-butyl-, Dimethylcyclohexyl-, Diethylbenzyl- und Triphenylamin, N,N,N',N'-Tetramethylethylendiamin, N,N,N',N'',N''-Pentamethyldiethylentriamin und Pyridin, von denen die tertiären Amine erfindungsgemäß vorteilhaft sind und deshalb bevorzugt verwendet werden.

Beispiele geeigneter tertiärer Phosphine sind Trimethyl-, Triethyl-, Tri-n-butyl-, Methyldiethyl-, Dimethyl-n-butyl- und Triphenylphosphin, von denen Triethylphosphin erfindungsgemäß vorteilhaft ist und deshalb bevorzugt verwendet wird.

Vorteilhafterweise wird man als Variable Z solche Verbindungen auswählen, welche nicht mit X oder Y reagieren.

In der allgemeinen Formel I bezeichnen die Indices a und b ganze Zahlen $\geqq 1$. Erfindungsgemäß ist es von Vorteil wenn a für 1 und b für 1 oder 2 stehen.

Demgegenüber steht der Index c der allgemeinen Formel I für 0 oder eine ganze Zahl $\geqq 1$ wobei es erfindungsgemäß von Vorteil ist, wenn c für 0, 1 oder 2 steht.

Allerdings darf der Index d der allgemeinen Formel I, welcher 0 oder eine ganze Zahl von 1 bis 6 bezeichnet, nicht gleich 0 sein, wenn c gleich 0 ist, und die Summe von b und c muß stets gleich 2a sein.

Des weiteren ist es erfindungsgemäß von Vorteil, wenn der Index d der allgemeinen Formel I

- für 6 steht, wenn die Variable Z einen der vorstehend genannten einwertigen Alkohole bezeichnet,
- für 3 steht, wenn die Variable Z einen der vorstehend genannten Diole, Aceton oder Methylethylketon, bezeichnet,
- für 2 oder 4 steht, wenn die Variable Z Tetrahydrofuran bezeichnet,
- für 2 steht, wenn die Variable Z Dioxan oder einen der vorstehend genannten Ester bezeichnet,
- für 1 steht, wenn die Variable Z Diethylenglykoldimethyl- oder -diethylether bezeichnet,
- für 2 oder 3 steht, wenn die Variable Z Di-n-butylether, n-Butylmethylether, Anisol, Acetophenon oder Benzophenon bezeichnet.

Beispiele für vorteilhafte Magnesiumverbindungen der allgemeinen Formel I, welche erfindungsgemäß bevorzugt verwendet werden sind $MgCl_2 \cdot 6$ Ethanol, $MgCl_2 \cdot 6$ Methanol, $MgCl_2 \cdot 3$ Octanol, $MgCl_2 \cdot 3$ Glykol, $MgCl_2 \cdot 4$ Tetrahydrofuran, $MgCl_2 \cdot 2$ Dioxan, $MgCl_2 \cdot$ Diethylenglykoldimethylether, $MgCl_2 \cdot 3$ Di-n-butylether, $MgCl_2 \cdot 3$ Aceton, $MgCl_2 \cdot$ Methylethylketon, $MgCl_2 \cdot 2$ Ethylacetat, $MgCl_2 \cdot 4$ Tri-n-butylamin, $MgCl_2 \cdot 3$ Tri-

phenylphosphin, $Mg(OH)Cl \cdot 6$ Ethanol, $Mg(OH)Br \cdot 4$ Tetrahydrofuran, $EthylMgBr \cdot 2$ Diethylether, $MethylMgBr \cdot 2$ Tetrahydrofuran, $CycohexylMgCl \cdot 2$ Dioxan, $PhenylMgBr \cdot 2$ Diethylether, $Mg(OC_2H_5)Cl \cdot 6$ Ethanol, $Mg(OC_3H_7) \cdot 6$ Propanol, und $Mg(OC_4H_9) \cdot 6$ n-Butanol, von denen $MgCl_2 \cdot 6$ Ethanol erfindungsgemäß besonders vorteilhaft ist und deshalb besonders bevorzugt verwendet wird.

Magnesiumverbindungen der allgemeinen Formel I sowie die Methoden zu ihrer Herstellung sind üblich und bekannt und werden in den Standardwerken der präparativen anorganischen und metallorganischen Chemie im Detail beschrieben.

Anstelle dieses ersten wesentlichen Ausgangsstoffs für die Herstellung der erfindungsgemäßen Komponente oder zusätzlich zu diesem können Magnesiumacetylacetonate verwendet werden. Beispiele geeigneter erfindungsgemäß zu verwendender Magnesiumacetylacetonate sind Magnesiumacetylacetonat, -3-methylacetylacetonat und Magnesiumperfluoracetylacetonat. Auch diese Magnesiumverbindungen und ihre Herstellmethoden sind üblich und bekannt.

Die anderen wesentlichen Ausgangsstoffe für die Herstellung der erfindungsgemäßen Komponente sind Vanadiumverbindungen der allgemeinen Formeln IIa bis IIf.

In den allgemeinen Formeln IIa bis IIf haben die Variablen X, Y und Z sowie der Index d die bei der allgemeinen Formel I angegebene Bedeutung.

Die Variable M der allgemeinen Formeln IId bis IIf bezeichnet das Kation eines Metalls der zweiten und dritten Hauptgruppe des Periodischen Systems der Elemente, worunter das Periodische System von Medeleev und Meyer zu verstehen ist, wie es beispielsweise in dem Lehrbuch von Dickerson und Geis, "Chemie, eine lebendige und anschauliche Einführung", Verlag Chemie, Weinheim, 1981, beschrieben wird. Hierbei ist Magnesium ausdrücklich ausgenommen. Beispiele geeigneter Kationen M sind $Ca^{2+}$, $Sr^{2+}$, $Ba^{2+}$, $B^{3+}$, $Al^{3+}$ und $Ga^{3+}$, wovon $Al^{3+}$ von Vorteil ist und daher bevorzugt verwendet wird.

In den allgemeinen Formeln IIe und IIf bezeichnet die Variable $Y^1$ einen den vorstehehend genannten Alkyl-, Cycloalkyl-, Aryl-, Alkoxy-, Cycloalkoxy- und Aryloxyreste Y. Die Variable $Z^1$ der allgemeinen Formeln IId bis IIe steht für einen der vorstehend genannten Alkohole Z, und die Variable $Z^2$ der allgemeinen Formeln IIe und IIf bezeichnet die vorstehend genannten Ether, tertiären Amine und tertiären Phosphine Z.

In den allgemeinen Formeln IId bis IIf steht der Index e für eine Zahl zwischen 0,2 und 1, wobei e stets ungleich 1 ist. Vorzugsweise bezeichnet e eine Zahl zwischen 0,3 und 0,9. Der Index f der allgemeinen Formeln IIe und IIf steht für 1, 2 und 3, und der Index j für 1, 2, 3 und 4. Die Indices g und h der allgemeinen Formeln IId bis IIf bezeichnen ganze Zahlen gößer oder gleich 1, vorzugsweise 1 und 2. Dem gegenüber steht der Index i für 0 oder eine ganze Zahl größer oder gleich 1, insbesondere 1 und 2. Hierbei gilt für die Indices g, h und i die Beziehung

$$h + i = g \text{ (Oxidationszahl von M)}$$

Beispiele geeigneter erfindungsgemäß zu verwendender Vanadiumverbindungen der allgemeinen Formeln IIa bis IIf sind $VOCl_3$, $VOBr_3$, $VCl_4$, $VBr_4$, $VCl_3 \cdot 6$ Methanol, $VBr_3 \cdot 6$ Methanol, $VCl_3 \cdot 6$ Ethanol, $VCl_3 \cdot 6$ Propanol, $VCl_3 \cdot 4$ Tetrahydrofuran, $VCl_3 \cdot 4$ Isopropanol, $VCl_3 \cdot 6$ Butan-2-ol, $VCl_3 \cdot 6$ 2-Methylbutan-2-ol, $(VCl_3 \cdot 6\ \text{Ethanol})_{0,7}\ ((C_2H_5O)AlCl_2)_{0,3}$, $(VCl_3 \cdot 6\ \text{Ethanol})_{0.8} \cdot (Al(OC_2H_5)_2Cl)_{0,2}$, $(VCl_3 \cdot 6\ \text{Isopropanol})_{0.3}(Al(O\text{-}iso\text{-}C_3H_7)_2Cl \cdot 2\ \text{Tetrahydrofuran})_{0,7}$, $(VOCl(C_2H_5)_2)_{0,85}((C_2H_5)AlCl_2)_{0,15}$, $(VOCl_2(OC_2H_5))_{0,5}(Al(OC_2H_5)_2Cl \cdot 2\ \text{Di-n-butylamin})_{0,5}$, $(VCl_2(OC_6H_5)_2)_{0,8}(Al(OC_6H_5)Cl_2 \cdot 2\ \text{Dioxan})_{0,2}$ und $(VCl_3(\text{cyclo-}C_6H_{13}))_{0,6}(Al(\text{cyclo-}C_6H_{13})_2Cl \cdot 2\ \text{Di-n-butylether})_{0,4}$,

Auch die Verbindungen der allgemeinen Formeln IIa bis IIf sowie die Methoden ihrer Herstellung sind üblich und bekannt. So können beispielsweise Verbindungen der allgemeinen Formel IIc durch Lösen von $VCl_3$ in Alkoholen, Verbindungen der allgemeinen Formel IId durch Umsetzen von Verbindungen der allgemeinen Formel IIc mit Verbindungen wie Diethoxyaluminiumchlorid in Tetrahydrofuran, Verbindungen der allgemeinen IIe und IIf durch Umsetzen von $VOCl_3$ oder $VCl_4$ mit Verbindungen wie Triethylaluminium, Diethylaluminiumchlorid, Diethoxyaluminiumchlorid, Triphenoxyaluminium oder Cyclohexylaluminiumdichlorid in inerten Lösungsmitteln wie Hexan oder Petrolether gegebenenfalls in der Gegenwart von Ethern, tertiären Aminen oder tertiären Phosphinen hergestellt werden.

Indes können anstelle der vorstehend genannten, gemeinsam zu verwendenden wesentlichen Ausgangstoffe, die Magnesiumverbindungen der allgemeinen Formel I und/oder die Magnesiumacetylacetonate sowie die Vanadiumverbindungen der allgemeinen Formeln IIa bis IIf, auch noch die Vanadiummagnesiumverbindungen der allgemeinen Formeln IIIa bis IIIc für die Herstellung der erfindungsgemäßen Komponente verwendet werden. Hierbei können die Vanadiummagnesiumverbindungen IIIa bis IIIc alleine oder zusätzlich zu mindestens einer der anderen vorstehend im Detail beschriebenen wesentlichen Ausgangsstoffe angewandt werden.

In den allgemeinen Formeln IIIa bis IIIc haben die Variablen X, Y, Z, $Z^1$, $Z^2$ und $Y^1$ sowie die Indices a, b, c, d, e, f, und j die vorstehend bei den allgemeinen Formeln I oder IIa bis IIf angegebene Bedeutung.

Beispiele geeigneter erfindungsgemäß zu verwendender Vanadiummagnesiumverbindungen der allgemeinen Formeln IIIa bis IIIc sind $(VCl_3 \cdot 6$ Isopropanol$)_{0,9}(MgCl_2 \cdot 6$ Isopropanol$)_{0,1}$, $(VCl_3 \cdot 6$ Ethanol$)_{0,3}$ $(Mg(OC_2H_5)Cl \cdot 4$ Tetrahydrofuran$)_{0,7}$, $(VOCl_2(C_2H_5))_{0,8}(C_2H_5MgCl \cdot 2$ Dioxan$)_{0,2}$, $(VO(OC_4H_9)_3)_{0,6}(C_4H_9MgCl \cdot 2$ Di-n-butylether$)_{0,4}$ und $(VCl_3($iso-$C_3H_7))_{0,85}($iso-$C_3H_7MgCl \cdot 3$ Triethylamin$)_{0,15}$.

Auch die Verbindungen der allgemeinen Formeln IIIa bis IIIc sowie die Methoden ihrer Herstellung sind üblich und bekannt: so können Verbindungen der allgemeinen Formel IIIa leicht durch Umsetzen einer Vanadiumverbindung der allgemeinen Formel IIc mit einer Magnesiumverbindung der allgemeinen Formel I und Verbindungen der allgemeinen Formel IIIb oder IIIc durch Umsetzen von Vanadiumverbindungen IIa oder IIb mit Diethoxymagnesium, Ethoxymagnesiumchlorid, Ethylmagnesiumchlorid, Diethylmagnesium, Di-n-butylmagnesium oder Isopropylmagnesiumchlorid in inerten Lösungsmitteln wie Hexan oder Petrolether gegebenenfalls in der Gegenwart von Ethern, tertiären Aminen oder tertiären Phosphinen hergestellt werden.

Nach ihrer Herstellung können die vorstehend beschriebenen wesentlichen Ausgangstoffe in Substanz isoliert werden. Für die Herstellung der erfindungsgemäßen Komponente können die isolierten wesentlichen Ausgangsstoffe verwendet werden oder sie können erneut in geeigneten oder in einem einzigen geeigneten Lösungsmittel wieder aufgelöst werden. Hierbei resultieren Lösungen, welche entweder jeweils nur einen oder auch mehrere der wesentlichen Ausgangsstoffe enthalten, oder es resultiert eine einzige Lösung, welche alle jeweils verwendeten wesentlichen Ausgangsstoffe gelöst enthält. Welcher Variante hierbei der Vorzug gegeben wird, richtet sich einerseits nach der erfindungsgemäßen Komponente, welche man jeweils herstellen will, und andererseits nach den Eigenschaften der hierfür notwendigen Ausgangsstoffe, insbesondere ihre Fähigkeit, nebeneinander in einer Lösung vorzuliegen, ohne daß es hierbei zu unerwünschten oder gefährlichen Zersetzungs- oder Fällungsreaktionen kommt. Der Fachmann kann daher leicht entscheiden, welche Variante er anwenden will; allenfalls muß er einige wenige orientierende Versuche durchführen.

Beispiele geeigneter Lösungsmittel, welche für das Auflösen der vorstehend im Detail beschriebenen wesentlichen Ausgangstoffe erfindungsgemäß geeignet sind, sind gesättigte aliphatische Kohlenwasserstoffe, aromatische Kohlenwasserstoffe, alkylierte aromatische Kohlenwasserstoffe, gesättigte aliphatische Kohlenwasserstoffe und alkylierte aromatische Kohlenwasserstoffe, welche 3 bis 19, insbesondere 3 bis 11, Kohlenstoffatome und 1 oder 2, insbesondere 1, Oxasauerstoffatome aufweisen, cyclische Ether mit 4 bis 6 Kohlenstoffatomen und 1 bis 3, insbesondere 1 oder 2, Oxasauerstoffen sowie ein- und mehrwertige gesättigte aliphatische Alkohole mit 1 bis 18 Kohlenstoffatomen im Alkylrest.

Beispiele gut geeigneter erfindungsgemäß anzuwendender Lösungsmittel für die wesentlichen Ausgangsstoffe sind Hexan, Heptan, Octan, Isooctan, Petrolether, Benzol, Toluol, o-, p- und m-Dimethylbenzol, Xylol, Isopropylbenzol, n-Butylbenzol, Ethylenglykoldimethylether, Anisol, Tetrahydrofuran, Dioxan, Methanol, Ethanol, Propanol, Isopropanol und n-Butanol.

Welche dieser geeigneten Lösungsmittel im Einzelfall verwendet werden, richtet sich einerseits nach den bekannten Löslichkeiten der aufzulösenden Ausgangstoffe und andererseits nach der chemischen Beständigkeit des Lösungsmittels gegenüber den jeweils verwendeten Ausgangsstoffen. So wird man stets solche Lösungsmittel und Ausgangsstoffe miteinander kombinieren, welche sich nicht gegenseitig zersetzen. Da die hierfür relevanten Eigenschaften der Lösungsmittel einerseits und der Ausgangsstoffe andererseits bekannt oder anhand einfacher Vorversuche zu ermitteln sind, kann der Fachmann sehr leicht für gegebene Ausgangsstoffe das geeignete Lösungsmittel oder Lösungsmittelgemisch und auch den Konzentrationsbereich der Ausgangsstoffe auswählen.

Unabhängig davon, welche der vorstehend im Detail beschriebenen wesentlichen Ausgangsstoffe und Lösungsmittel angewandt werden und ob diese Ausgangsstoffe in Substanz zusammen oder von einander getrennt oder von einander getrennt in mehreren Lösungen oder zusammen in einer einzigen Lösung bei der Herstellung der erfindungsgemäßen Komponente zur Anwendung kommen, werden pro Äquivalent oder mol Vanadium 0,01 bis 5 Äquivalente oder mol Magnesium angewandt. Es ist durchaus möglich, Vanadium und Magnesium in anderen Molverhältnissen zu verwenden, indes stellen sich dann die besonderen vorteilhaften Wirkungen der erfindungsgemäßen Komponente und des hiermit hergestellten erfindungsgemäßen Katalysators nicht mehr in zuverlässiger Weise ein, sondern können unter Umständen ausbleiben. Das Molverhältnis von Vanadium zu Magnesium von 0,01 bis 5 ist somit ein optimaler Bereich, innerhalb dessen das Molverhältnis breit variiert und den jeweiligen Verhältnissen angepaßt werden kann, ohne daß dabei ein Verlust der erfindungsgemäß erzielten Vorteile eintritt.

Für die Herstellung der erfindungsgemäßen Komponente werden die vorstehend im Detail beschriebenen wesentlichen Ausgangsstoffe in an sich bekannter Weise in Substanz oder aus ihren Lösungen oder ihrer Lösung gleichzeitig oder nacheinander in beliebiger Reihenfolge auf einen festen, feinteiligen inerten

anorganischen oder organischen Träger aufgebracht. Hierbei werden die üblichen und bekannten Mischtechniken angewandt.

Erfindungsgemäß ist es von Vorteil, wenn das Gewichtsverhältnis von festem, feinteiligem inertem organischem oder anorganischem Träger zu den wesentlichen Ausgangsstoffen bei 10 : 1 bis 1 : 3, insbesondere 5 : 1 bis 1 : 2, liegt.

Beispiele für feste, feinteilige inerte organische und anorganische Träger, welche für die Herstellung der erfindungsgemäßen Komponente geeignet sind, sind Polyethylenpartikel eines Teilchendurchmessers von 1 bis 1000, insbesondere 1 bis 400 µm sowie Siliciumdioxid, Borosilikat, Aluminiumsilikat, Aluminiumphosphat und Silicium-Metall-Cogele, wobei als Metall Magnesium, Titan und/oder Zirkon in Betracht kommt, Magnesiumoxid, Magnesiumhydroxid, Magnesiumchlorid und Magnesiumcarbonat eines Teilchendurchmessers von 1 bis 1000, insbesondere 1 bis 400 µm, Hiervon sind diejenigen anorganischen Träger bevorzugt, welche ein Porenvolumen von 0,3 bis 3, insbesondere 1 bis 2,5 $cm^3/g$, aufweisen. Zusätzliche Vorteile ergeben sich, wenn diese anorganischen Träger eine Oberfläche von 100 bis 1000, insbesondere 200 bis 400 $m^2/g$ haben. Ganz besonders vorteilhaft ist ein Aluminiumsilikat der Formel $SiO_2 \cdot rAl_2O_3$ mit r gleich einer Zahl größer 0 und kleiner gleich 2, insbesondere kleiner gleich 0,5, welches das vorstehend genannte Eigenschaftsprofil aufweist.

Nach dem Auftragen der wesentlichen Ausgangsstoffe auf die vorstehend beschriebenen Träger können die gegebenenfalls verwendeten Lösungsmittel unter Normaldruck oder im Vakuum abdestilliert oder durch Filtration abgetrennt werden, wonach die resultierenden erfindungsgemäßen Komponenten noch gewaschen und getrocknet werden können.

Die in erfindungsgemäßer Verfahrensweise herstellbaren erfindungsgemäßen Komponenten eignen sich hervorragend für die Herstellung der erfindungsgemäßen Katalysatoren.

Zu diesem Zweck werden die erfindungsgemäßen Komponenten in mindestens einem der vorstehend genannten gesättigten aliphatischen und/oder aromatischen Kohlenwasserstoffe und/oder alkylierten Aromaten suspendiert und mit einer metallorganischen Verbindung der allgemeinen Formel VIII

$M^2R_pX^1_{q-p}$ (VIII)

umgesetzt.

In der allgemeinen Formel VIII steht die Variable $M^2$ für ein Metall der ersten bis dritten Hauptgruppe des Periodischen Systems der Elemente, insbesondere Lithium, Magnesium und Aluminium. Der Index p bezeichnet eine Zahl größer gleich 1, und der Index q ist gleich der Differenz zwischen der Oxidationszahl oder der Wertigkeit von $M^2$ und dem Index p. Die Variablen R und $X^1$ haben die nachstehend bei der allgemeinen Formel IV näher erläuterte Bedeutung.

Beispiele geeigneter erfindungsgemäß zu verwendender metallorganischer Verbindungen der allgemeinen Formel VIII sind Butyllithium, Ethyl-, Propyl- und n-Butylmagnesiumchlorid, Diethyl-, Dipropyl-, Di-n-butyl-, Di-n-hexyl-, Diheptyl- und Dioctylmagnesium sowie Triethylaluminium, Diethylaluminiumchlorid und -bromid, Ethylaluminiumdichlorid und -di-bromid, Tri-n-butylaluminium, Di-n-butylaluminiumchlorid, n-Butylaluminiumdichlorid, Diethylaluminiumhydrid, Di-n-butylaluminiumhydrid, Diisopropylisopropoxyaluminium (Isoprenylaluminium), Tri-iso-butylaluminium, $Al(C_2H_5)_{1,5}Cl_{1,5}$, $Al(C_2H_5)_{1,5}Br_{1,5}$ und $Al(C_2H_5)_{1,5}(OC_2H_5)_{1,5}$, von denen Isoprenylaluminium, Diethylaluminiumchlorid und Ethylaluminiumdichlorid besonders vorteilhaft sind und deshalb bevorzugt verwendet werden.

Hierbei ist es erfindungsgemäß von Vorteil, eine 0,1 bis 50 gew.-%ige, vorzugsweise etwa 25 gew.-%ige, Suspension der erfindungsgemäßen Komponente mit einer 5 bis 80 gew.-%igen, vorzugsweise etwa 20 gew.-%igen, Lösung mindestens einer metallorganischen Verbindung der allgemeinen Formel VIII in einer Menge zu versetzen, daß ein Atomverhältnis von Vanadin zu $M^2$ von 1 : 0,05 bis 1 : 30, insbesondere 1 : 0,1 bis 1 : 5, resultiert. Außerdem ist es von Vorteil, die hierdurch resultierende Suspension während 15 min bis 10 Stunden, insbesondere 1 bis 5 Stunden, bei Temperaturen von -25 bis 120 °C zu rühren. Die hierbei erhaltene modifizierte erfindungsgemäße Komponente kann direkt in Suspension zu dem erfindungsgemäßen Katalysator weiterverarbeitet oder vorher in Substanz durch Filtration, Waschen und Trocknen isoliert werden.

Unabhängig davon, ob die modifizierte erfindungsgemäße Komponente in Suspension oder in Substanz verwendet wird, wird sie zur Herstellung des erfindungsgemäßen Katalysators in an sich bekannter Weise mit mindestens einer aluminiumorganischen Verbindung und mindestens einem Cokatalysator vermischt.

Beispiele geeigneter erfindungsgemäß anzuwendender aluminiumorganischer Verbindungen sind die vorstehend genannten aluminiumorganischen Verbindungen, welche unter die allgemeine Formel VIII fallen. Hiervon ist Tri-iso-butylaluminium erfindungsgemäß von Vorteil und wird deshalb bevorzugt verwendet.

Beispiel geeigneter erfindungsgemäß anzuwendender Cokatalysatoren sind Organohalogenverbindungen und anorganische oder organische Stickstoff-Sauerstoff-Verbindungen.

Beispiele gut geeigneter Organohalogenverbindungen sind gesättigte und olefinisch und acetylenisch ungesättigte halogenierte Kohlenwasserstoffe und aromatische halogenierte Kohlenwasserstoffe sowie olefinisch ungesättigte aliphatische halogenierte Carbonsäureester wie auch Gemische aus diesen Verbindungen. Hiervon sind Chloroform, 1,1,1-Trichlorethan und Trichlorfluormethan besonders vorteilhaft und werden erfindungsgemäß besonders bevorzugt verwendet.

Beispiele gut geeigneter anorganischer und organischer Sickstoff-Sauerstoff-Verbindungen sind Stickoxide, Nitroso- und Nitroverbindungen sowie Nitrite und Nitrate wie NO, $NO_2$, $N_2O$, Nitrosodiphenylamin, Nitrobenzol, Nitromethan, iso-Butylnitrit, iso-Amylnitrit und iso-Propylnitrat.

Als Polymerisationsverfahren kommen die Verfahren des Standes der Technik zur Homo- und Copolymerisation des Ethylens in Betracht wie beispielsweise die Suspensions- oder Trockenbettpolymerisationsverfahren im gewirbelten oder gerührten Festbett, wie sie in der US-A-3 242 150, der DE-A-32 39 883 oder der EP-A-0 004 645 beschrieben sind.

Bei diesen Verfahren kann die erfindungsgemäße modifizierte Komponente in unterschiedlicher Weise in den Polymerisationsraum eingebracht werden: So können die erfindungsgemäße modifizierte Komponente, die Organoaluminiumverbindung sowie der Cokatalysator

1. alle zusammen an ein und derselben Stelle des Reaktionsgefäßes,
2. getrennt von einander an verschiedenen Stellen des Reaktionsgefäßes oder
3. als Gemisch zweier Bestandteile an einer Stelle und der dritte Bestandteil an einer anderen Stelle des Reaktionsgefäßes

eingebracht werden.

Das Polymerisationsverfahren, welches vorzugsweise kontinuierlich durchgeführt wird, eignet sich wegen der hierbei verwendeten erfindungsgmäßen modifizierten Komponente bzw. des erfindungsgemäßen Katalysators hervorragend zur Homopolymerisation des Ethylens. Insbesondere eignet sich das Polymerisationsverfahren für die Copolymerisation des Ethylens mit untergeordneten Mengen an $C_3$- bis $C_8$-alpha-Monoolefinen, wobei diese einzeln oder als Gemische copolymerisiert werden können. Beispiele geigneter alpha-Monoolefine sind Propen, But-1-en, 4-Methylpent-1-en, n-Hex-1-en, n-Hept-1-en und n-Oct-1-en. Vorteilhafterweise werden sie in Mengen von 0,1 bis 10 mol%, bezogen auf die Copolymerisate, verwendet. Sowohl die Homo- als auch die Copolymerisation des Ethylens werden vorteilhafterweise bei Temperaturen von 0 bis 200 °C und Drücken von 0,1 bis 200 bar durchgeführt. Die Molekulargewichte der Homo- und Coplymerisate werden dabei mit den üblichen und bekannten Reglern, insbesondere Wasserstoff, geregelt.

Die mit Hilfe des erfindungsgemäßen Katalysators durchgeführten Homo- und Copolymerisationsverfahren weisen besondere Vorteile auf, welche auf den erfindungsgemäßen Katalysator bzw. auf die erfindungsgemäße Komponente zurückzuführen sind. So liefern sie bei hoher Produktivität Ethylenhomopolymerisate und -copolymerisate mit gezielt einstellbarer Molmasse und Molmassenverteilung. Darüber hinaus haben die mit Hilfe des Copolymerisationsverfahrens hergestellten Copolymerisate eine vorteilhaft ausgewogene Comonomerverteilung, d.h, die Comonomere sind in der Tat statistisch in den Copolymerisaten verteilt und liegen nicht etwa als Blöcke oder gar als separate Polymerisate vor. Sowohl die Homo- als auch die Copolymerisate weisen eine ausgezeichnete Verarbeitbarkeit, eine gute Kornbeschaffenheit und nur geringe in Kohlenwasserstoffen lösliche Anteile auf. Besonders hervorzuheben ist die Eigenschaftskombination aus hoher Steifigkeit, hoher Spannungsrißkorrosionsbeständigkeit und hoher Schockzähigkeit, welche es gestattet, aus den in erfindungsgemäßer Verfahrensweise hergestellten Homo- und Copolymerisaten nach dem Extrusionsblasformverfahren Fertigteile mit glatter Oberfläche und guter Wanddickenverteilung zu gewinnen. Ein weiterer nicht zu unterschätzender Vorteil, welcher gleichfalls auf die Verwendung des erfindungsgemäßen Katalysators zurückzuführen ist, ist die Vermeidung des "reactor-fouling".

Nicht zuletzt aber liegt der Vorteil der erfindungsgemäßen Komponente, des erfindungsgemäßen Katalysators und der erfindungsgemäßen Polymerisationsverfahren darin, daß sie zum Zwecke der Herstellung von Ethylenhomopolymerisaten und -copolymerisaten mit außergewöhnlich gutem Eigenschaftsprofil in einfacher und daher eleganter Weise gezielt variiert werden können.

So kann bei der Herstellung der erfindungsgemäßen Komponente außer den vorstehend im Detail beschriebenen wesentlichen Ausgangsstoffen auch noch mindestens eine Borverbindung der allgemeinen Formel IV

$$BX^1_kY^2_lR_m \quad (IV)$$

in Substanz oder aus Lösung auf dem feinteiligen, festen inerten Träger aufgebracht werden.

In der allgemeinen Formel IV bezeichnet die Variable $X^1$ Chlor,Brom oder Wasserstoff, die Variable $Y^2$ einen der vorstehend genannten Alkoxy-, Cycloalkoxy- und Aryloxyreste oder einen Aminorest und die

Variable R einen $C_1$- bis $C_{18}$-Alkyl-, einen $C_5$- bis $C_{20}$-Cycloalkyl- und einen $C_6$- bis $C_{20}$-Arylrest. Die Indices k und m stehen für 0 oder für ganze Zahlen größer gleich 1; der Index l dagegen bezeichnet eine ganze Zahl größer gleich 1, wobei die Summe der Indices l, m und n stets gleich 3 ist.

Beispiele geeigneter erfindungsgemäß anzuwendender Borverbindungen der allgemeinen Formel IV sind Trimethyl-, Trisopropyl-,Tri-n-butyl, Triphenyl- und N,N-Dimethylamino-diphenylborat, von denen Triisopropyl- und Triphenylborat von Vorteil sind und deshalb bevorzugt verwendet werden.

Des weiteren kann bei der Herstellung der erfindungsgemäßen Komponente zusätzlich zu der Borverbindung der allgemeinen Formel IV oder anstelle von dieser mindestens ein Acetylacetonat eines Kations M der zweiten und dritten Hauptgruppe des Periodischen Systems der Elemente, ausgenommen Magnesium, in Substanz oder aus Lösung auf den feinteiligen, festen inerten Träger aufgebracht werden. Hierbei sind die Acetylacetonate des Aluminiums, insbesondere Aluminiumacetylacetonat, -3-methylacetylacetonat und -perfluoractylacetonat, von Vorteil und werden daher bevorzugt verwendet.

Außerdem kann bei der Herstellung der erfindungsgemäßen Komponente zusätzlich zu den vorstehend angegebenen Borverbindungen IV und Acetylacetonaten oder anstelle von diesen noch mindestens eine Siliciumverbindung der allgemeinen Formel V

$SiX^1_kY^2_lR_m$ (V)

in Substanz oder aus Lösung auf den feinteiligen, festen inerten Träger aufgetragen werden.

In der allgemeinen Formel V haben die Indices und die Variablen die bei der allgemeinen Formel IV angegebene Bedeutung, wobei hier die Summe der Indices k, l und m stets gleich 4 ist.

Beispiele geeigneter erfindungsgemäß anzuwendender Siliciumverbindungen der allgemeinen Formel V sind Tetramethoxy-, Tetraethoxy-, Tetrapropoxy-, Tetra-n-butoxy- und Tetraphenoxysilan sowie die gemischt substituierten Analoga; Methyl-, Ethyl-, Isopropyl-, Isobutyl- und Phenyltrimethoxysilan, -triethoxysilan, -tripropoxysilan, -tri-n-butoxysilan, -triisobutoxysilan und -triphenoxysilan sowie die gemischt substituierten Analoga; Dimethyl-, Diethyl-, Diisopropyl-, Di-iso-butyl- und Diphenyldimethoxysilan, -diethoxysilan, -dipropoxysilan, -di-n-butoxysilan, -diisobutoxysilan und -diphenoxysilan sowie die gemischt substituierten Analoga; Trimethyl-, Triethyl-, Triisopropyl-, Tri-iso-butyl- und Triphenylmethoxysilan, -ethoxysilan, -isopropoxysilan, -isobutoxysilan und -phenoxysilan sowie die gemischt substituierten Analoga; sowie Bis-N,N-dimethylamino-methyl-, Tris-N,N-dimethylamino-methyl-, Tris-N,N-dimethylamino-chlor-, N,N-Diethylamino-trimethyl-, N,N-Di-isopropylamino-trimethyl- und N-tert.-Butylamino-trimethylsilan. Hiervon sind Tetrapropoxy- und Tetrabutoxysilan, Isopropyl- und Isobutyltrimethoxysilan, Methyltriisobutoxysilan, Diisopropyl- und Diisobutyldimethoxy- und -diethoxysilan, Dimethyldiisobutoxysilan, Trimethyl- und Triethylisopropxy- und -isobutoxysilan sowie N,N-Diethylamino- und N,N-Di-isopropylamino-trimethylsilan von Vorteil und werden deshalb bevorzugt verwendet.

Des weiteren kann bei der Herstellung der erfindungsgemäßen Komponente zusätzlich zu den vorstehend im Detail beschriebenen Borverbindungen IV, den Acetylacetonaten und/oder den Siliciumverbindungen V oder anstelle dieser Verbindungen auch noch mindestens eine Siliciumverbindung der allgemeinen Formel VI

$R^1_3Si\text{-}(E)_n\text{-}R^1$ (VI)

in Substanz oder aus Lösung auf den festen, feinteiligen inerten Träger aufgetragen werden.

In der allgemeinen Formel VI bezeichnet die Variable $R^1$ Wasserstoff, Chlor und Brom sowie die vorstehend im Detail beschriebenen Alkyl-, Cycloalkyl-, Aryl-, Alkoxy-, Cycloalkoxy- und Aryloxyreste $Y^1$, der Index n eine ganze Zahl von 1 bis 5 und die Variable E mindestens einen Rest der allgemeinen Formeln VIa bis VIc.

$$-SiR^1_2- \quad (VIa) \qquad -OSiR^1_2- \quad (VIb) \qquad -\overset{R^2}{N}-SiR^1_2 \quad (VIc)$$

In den allgemeinen Formeln VIa bis VIc hat die Variable $R^1$ die vorstehend angegebene Bedeutung. Die Variable $R^2$ dagegen steht für einen Alkyl-, Cycloalkyl- und Arylrest $Y^1$ und für Wasserstoff.

Beispiele geeigeter erfindungsgemäß zu verwendender Siliciumverbindungen der allgemeinen Formel VI sind Hexamethyl-, Hexaethyl-, Hexapropyl-, Hexabutyl- und Hexaphenyldisilan und -disiloxan; 1,3-Dichloro-tetraphenyl-, -tetraisopropyl-, -tetraphenyl- und -1,3-dimethyl-1,3-diphenyldisiloxan; 1,3-Dimethyl- und 1,3-Diphenyl-tetramethoxydisiloxan; Tetraethyl-1,3-diethoxydisiloxan, 1,5-Dichlorhexamethyltrisiloxan, 1,1,1,3,3,5,5-Heptamethyltrisiloxan, 1,1,3,3,5,5-Hexamethyltrisiloxan, 1,1,3,3,5,5-Hexamethyl-dimethoxytrisiloxan, 1,1,5,5-Tetraphenyl-1,3,3,5-tetramethyltrisiloxan, Decamthyltetrasiloxan, 1,7-Dichlorooctamethyltetrasiloxan; sowie 1,3-Di-n-octyl-tetramethyl-, 1,3-Diphenyl-tetramethyl-, Heptamethyl-, Hexamethyl-, Hexaethyl-, Hexapropyl-, Hexabutyl- und Hexaphenyldisilazan. Hiervon sind Hexapropyl-und Hexaethyldisilan- und -disiloxan, Hexabutyl-, 1,3-Dichloro-tetraisopropyl-, 1,3-Dimethyl-tetramethoxy- und Tetraethyl-1,3-diethoxydisiloxan sowie 1,1,3,3,5,5-Hexamethyl-trisiloxan und Hexamethyldisilazan vorteilhaft und werden deshalb bevorzugt verwendet.

Nicht zuletzt kann bei der Herstellung der erfindunsgemäßen Komponente außer den vorstehend genannten Borverbindungen IV, den Acetylacetonaten und/oder den Siliciumverbindungen V und VI oder anstelle dieser Verbindungen noch mindestens eine Titanverbindung der allgemeinen Formeln VIIa bis VIId

| $TiX_4$ | $TiX_3Z_d$ | $TiX_3 \cdot 1/3\ AlX_3 \cdot Z_d$ |
|---|---|---|
| (VIIa) | (VIIb) | (VIIc) |

$(Ti_{4-j} \cdot Y^1{}_j)_e \cdot (M^1{}_g X_h Y^1{}_i Z^2{}_d)_{1-e}$ (VIId)

in Substanz oder aus Lösung auf den festen, feinteiligen inerten Träger aufgetragen werden.

In den allgemeinen Formeln VIIa bis VIId haben die Variablen X und Z sowie der Index d die bei der allgemeinen Formel I angegebene Bedeutung, und die Variablen $Y^1$ und $Z^1$ sowie die Indices e, j, g, h und i haben die bei den allgemeinen Formeln IIa bis IIf angegebene Bedeutung. Die Variable $M^1$ dagegen steht für das Kation eines Metalls der zweiten und dritten Hauptgruppe des Periodischen Systems der Elemente, inclusive Magnesium. Vorzugsweise steht $M^1$ für Aluminium.

Beispiele geeigneter erfindungsgemäß zu verwendender Titanverbindungen der allgemeinen Formeln VIIa bis VIId sind Titantetrachlorid, Titantetrabromid, Titantrichlorid•6 Ethanol, Titantrichloride und -bromide, wie sie bei der Reduktion von Titantetrachlorid oder -tetrabromid mit Wasserstoff, Aluminium und aluminiumorganischen Verbindungen anfallen, sowie deren Alkoholkomplexe, insbesondere $TiCl_3 \cdot 1/3\ AlCl_3$ und $TiCl_3 \cdot 1/3\ AlCl_3 \cdot 4$ Isopropanol, $(C_2H_5OTiCl_3)_{0,7}((C_2H_5O)_2AlCl)_{0,3}$ und $((C_6H_5O)_2TiCl_2)_{0,5}(MgCl_2 \cdot 2$ Di-n-butylether$)_{0,5}$. Hiervon ist $TiCl_3 \cdot 1/3\ AlCl_3 \cdot 4$ Isopropanol besonders vorteilhaft und wird deshalb besonders bevorzugt verwendet.

Die Borverbindungen IV, die Siliciumverbindungen V und VI, die Acetylacetonate der Kationen M und die Titanverbindungen VII sind an sich bekannte Verbindungen, welche z.T. im Handel erhältlich sind oder in üblicher und bekannter Weise hergestellt werden können. Sie können in der gleichen Weise wie die wesenlichen Ausgangsstoffe auf die festen, feinteiligen inerten Träger aufgebracht werden. Vorteilhafterweise werden sie einzeln oder als Gemische in einer Menge von bis zu 5 mol pro mol Vanadium angewandt.

Aufgrund ihrer Verwendung ergeben sich zahlreiche weitere zusätzliche Vorteile für die erfindungsgemäße Komponente, den erfindungsgemäßen Katalysator und die mit deren Hilfe hergestellten Ethylenhomopolymerisate und -copolymerisate. So erlaubt der erfindungsgemäße Katalysator, welcher in der vorstehend erläuterten Weise modifiziert worden ist, die Herstellung von Ethylenhomopolymerisaten und -copolymerisaten, welche eine besonders gute Blasenstabilität beim Folienblasprozeß haben und Folien mit sehr geringem Gelgehalt, hoher mechanischer Festigkeit und papierähnlicher Steifigkeit liefern. Außerdem ermöglicht der modifizierte erfindungsgemäße Katalysator die Herstellung von Ethylenhomopolymerisaten und -copolymerisaten mit einer Dichte oberhalb 0,935 g/cm³, einer intrinsischen Viskosität [$\eta$] größer als 1,9 dl/g und/oder einem "high-load melt index" HLMI bei 190°C und 2,16 kg Belastung von mehr als 5 g/min und einer gezielt einstellbaren ausgesprochen breiten Molekulargewichtsverteilung.

Beispiele

In den nachfolgenden Beispielen wurde

- die intrinsische Viskosität [$\eta$] (dl/g) nach DIN 53 720
- der "high-load melt index" HLMI (g/10 min) bei 190°C und einer Belastung von 2,16 kg nach DIN 53 735

- die Dichte ($g/cm^3$) nach DIN 53 479
- die "environmental stress cracking resistance" ESCR (h) (Spannungsrißkorrosionsbeständigkeit) nach ASTM D 1693 und
- die Kerbschlagzugzähigkeit nach DIN 53 448

gemessen. Des weiteren wurde die Produktivität der erfindungsgemäßen Katatalysatoren in g Polymerisat pro g Vanadium in üblicher und bekannter Weise bestimmt.

Beispiel 1

Die Herstellung eines Ethylen-But-1-en-Copolymerisats mit Hilfe eines erfindungsgemäßen Vanadium und Magnesium enthaltenden Katalysators

Versuchsvorschrift:

1.1 Die Herstellung der modifizierten erfindungsgemäßen Komponente

39 g Siliciumdioxid eines Teilchendurchmessers von 10 bis 45 µm, eines Porenvolumens von 1,7 $cm^3/g$ und einer spezifischen Oberfläche von 320 $m^2/g$ wurden mit einer Lösung von 54,8 g $VCl_3 \cdot 4$ Isopropanol und 39,6 g $MgCl_2 \cdot 6$ Ethanol in 150 ml Tetrahydrofuran vereinigt. Die hierbei resultierende Suspension wurde kurz gerührt und im Anschluß daran bei 70 °C und einem Druck von 10 mbar eingedampft. 20 g der hierdurch erhaltenen erfindungsgemäßen Komponente wurden in 100 ml n-Heptan suspendiert. Die Suspension wurde mit einer Lösung von 5,15 g Diethylaluminiumchlorid in 50 ml n-Heptan versetzt. Die hierbei resultierende Reaktionsmischung wurde 2 Stunden bei 65 °C gerührt. Anschließend wurde die gebildete modifizierte erfindungsgemäße Komponente abfiltriert, dreimal mit n-Heptan gewaschen und im Vakuum getrocknet.

1.2 Die Copolymerisation unter Verwendung des erfindungsgemäßen Katalysators

Ein 10 Liter-Autoklav wurde mit 5 l Isobutan, 0,27 l But-1-en, 4 Nl Wasserstoff, 121 mg der modifizierten erfindungsgemäßen Komponente, 5 mmol Triisobutylaluminium und 2 mmol Trichlorfluormethan beschickt. Hiernach wurde unter Rühren und bei einem durch Regelung konstant gehaltenen Ethylendruck von 16,5 bar bei einer Temperatur von 80 °C während 1,5 Stunden polymerisiert. Nach dieser Zeit wurde die Polymerisation durch Entspannen des Drucks abgebrochen, und das Ethylencopolymerisat wurde in an sich bekannter Weise isoliert und charakterisiert. Die hierbei erhaltenen Ergebnisse finden sich in der Tabelle. Sie untermauern die Vorteilhaftigkeit sowohl der erfindungsgemäßen Komponente und des erfindungsgemäßen Katalysators als auch des hiermit hergestellten Copolymerisats.

Beispiel 2

Die Herstellung eines Ethylen-But-1-en-Copolymerisats mit Hilfe eines erfindungsgemäßen Vanadium, Magnesium und Silicium enthaltenden Katalysators

Versuchsvorschrift:

2.1 Die Herstellung der modifizierten erfindungsgemäßen Komponente

Es wurde wie in Beispiel 1 verfahren, nur daß 134,5 g Siliciumdioxid des Beispiels 1, 70,2 g der Vanadiumverbindung des Beispiels 1, 32,9 g der Magnesiumverbindung des Beispiels 1 und 49,8 g Methyltriisobutoxysilan in 471 ml Tetrahydrofuran für die Herstellung der erfindungsgemäßen Komponente verwendet wurden.

Die Komponente wurde dann wie in Beispiel 1 beschrieben modifiziert.

2.2 Die Copolymerisation unter Verwendung des erfindungsgemäßen Katalysators

Beispiel 1 wurde wiederholt, nur daß 148 mg der gemäß 2.1 hergestellten modifizierten Komponente zur Anwendung kamen.

Die Eigenschaften des hierbei resultierenden Copolymerisats finden sich gleichfalls in der Tabelle. Sie untermauern die bereits in Beispiel 1 angesprochene Vorteilhaftigkeit der erfindungsgemäßen Komponente,

des erfindungsgemäßen Katalysators und des hiermit hergestellten Copolymerisats.

Beispiel 3

Die Herstellung eines Ethylen-But-1-en-Copolymerisats mit Hilfe eines erfindungsgemäßen Vanadium, Magnesium und Titan enthaltenden Katalysators

Versuchsvorschrift:

3.1 Die Herstellung der modifizierten erfindungsgemäßen Komponente

Es wurde wie im Beispiel 1 verfahren, nur daß 20 g des Siliciumdioxid des Beispiels 1, 5,9 g der Vanadiumverbindung des Beispiels 1, 54,4 g $MgCl_2 \cdot 3$ Octanol und 2,1 g $TiCl_3 \cdot 1/3\ AlCl_3 \cdot 4$ Isopropanol in 90 ml Tetrahydrofuran zur Anwendung kamen.

Die Modifizierung der hierbei erhaltenen erfindungsgemäßen Komponente wurde wie bei Beispiel 1 beschrieben durchgeführt, nur daß 7,2 g Diethylaluminiumchlorid zur Anwendung kamen.

3.2 Die Copolymerisation unter Verwendung des erfindungsgemäßen Katalysators

Es wurde wie in Beispiel 1 verfahren, nur daß 121 mg der gemäß 3.1 hergestellten modifizierten Komponente verwendet wurden.

Die Tabelle gibt einen Überblick über das besonders vorteilhafte Eigenschaftsprofil des resultierenden Coplymerisats. Dieses Eigenschaftsprofil ist ein weiterer Beleg für die Vorteilhaftigkeit der erfindungsgemäßen Komponente und des erfindungsgemäßen Katalysators.

Beispiel 4

Die Herstellung eines Ethylen-But-1-en-Copolymerisats mit Hilfe eines erfindungsgemäßen Vanadium, Magnesium, Titan und Silicium enthaltenden Katalysators

Versuchsvorschrift:

4.1 Die Herstellung der modifizierten erfindungsgemäßen Komponente

Es wurde wie im Beispiel 1 verfahren, nur daß 20 g des Siliciumdioxid des Beispiels 1, 10,5 g der Vanadiumverbindung des Beispiels 1, 0,9 g der Titanverbindung des Beispiels 3, 9,8 g der Magnesiumverbindung des Beispiels 1 und 5,7 ml Dimethyldiisobutoxysilan zur Anwendung kamen.

Bei der Modifizierung der resultierenden Komponente wurde wie in Beispiel 1 beschrieben verfahren, nur daß 6,4 g Diethylaluminiumchlorid verwendet wurden.

4.2 Die Copolymerisation unter Verwendung des erfindungsgemäßen Katalysators

Es wurde wie in Beispiel 1.2 verfahren, nur daß 123 mg der gemäß 4.1 hergestellten modifizierten Komponente verwendet wurden.

Das Eigenschaftsprofil der hierbei erhaltenen Copolymerisate ist ebenfalls in der Tabelle im Überblick dargestellt. Dieses Eigenschaftsprofil läßt noch einmal die besondere Vorteilhaftigkeit sowohl der erfindungsgemäßen Komponente und des erfindungsgemäßen Katalysators als auch der hiermit hergestellten Polymerisate deutlich werden.

Tabelle: Anwendungstechnische Eigenschaften der Ethylen-But-1-en-Copolymerisate der Beispiele 1 bis 4

| Beispiel Nr. | Produktivität g Polymerisat pro g Vanadium | [η][a] dl/g | HLMI[b] g/10 min | Dichte[c] g/cm3 | Gehalt an Isobutan % | Environmental[d] stress cracking resistance ESCR h | Kerbschlagzugzähigkeit kJ/m2 |
|---|---|---|---|---|---|---|---|
| 1 | 120 640 | 3,06 | 15 | 0,945 | 2,3 | 10 000 | 190 |
| 2 | 166 200 | 2,92 | 14 | 0,944 | 2,5 | 12 000 | 200 |
| 3[f] | 120 000 | 2,97 | 18 | 0,946 | 2,3 | 11 500 | 180 |
| 4[f] | 169 300 | 3,01 | 21 | 0,947 | 2,0 | 11 000 | 190 |

a) bestimmt nach DIN 53 720

b) bestimmt nach DIN 53 735 bei 190°C bei 2,16 kg Belastung

c) bestimmt nach DIN 53 479

d) bestimmt nach ASTM D 1693

e) bestimmt nach DIN 53 448

f) bei diesen Beispielen wurde noch der Schubmodul nach DIN 53 445 bestimmt; er lag bei 750 $N/mm^2$

## Patentansprüche

1. Vanadium und Magnesium enthaltende Komponente für ein Ziegler-Katalysatorsystem, herstellbar, indem man mindestens eine Magnesiumverbindung und mindestens eine Vanadiumverbindung nacheinander in beliebiger Reihenfolge oder gleichzeitig aus Lösung(en) oder in Substanz auf einen festen, feinteiligen, inerten organischen oder anorganischen Träger aufträgt, dadurch gekennzeichnet, daß man hierbei entweder

(1) mindestens eine Magnesiumverbindung der allgemeinen Formel I

$Mg_aX_bY_cZ_d$ (I),

worin die Indices und die Variablen die folgende Bedeutung haben:

X Chlor und Brom,
Y Wasserstoff und Hydroxyl-, Alkyl-, Cycloalkyl-, Aryl-, Alkoxy-, Cycloalkoxy- und Aryloxyrest,
Z Alkohol, Ether, Aldehyd, Ester, Keton, Amin und organisches Phosphin,
a,b ganze Zahlen ≧ 1,
c 0 und ganze Zahl ≧ 1,
d 0 oder eine ganze Zahl von 1 bis 6,

mit den Maßgaben:

(i) $b + c = 2a$ und
(ii) $d \neq 0$, wenn $c = 0$;

und/oder mindestens ein Magnesiumacetylacetonat sowie mindestens eine Vanadiumverbindung der allgemeinen Formeln IIa bis IIf,

| $VOX_3$ | $VX_4$ | $VX_3Z^1{}_d$ |
|---|---|---|
| (IIa) | (IIb) | (IIc) |

$[VX_3Z^1{}_d]_e \cdot (M_gX_bY_cZ_d)_{1-e}$ (IId)
$(VOX_{3-f}Y^1_f)_e \cdot (M_gX_hY^1_iZ^2_d)_{1-e}$ (IIe)
$(VX_{4-j}Y^1_j)_e \cdot (M_gX_hY^1_iZ^2_d)_{1-e}$ (IIf)

worin die Variablen X, Y und Z sowie der Index d die bei der allgemeinen Formel I angegebene Bedeutung und die übrigen Indices und Variablen die nachstehend angegebene Bedeutung haben:

M Kation eines Metalls der 2. und 3. Hauptgruppe des Periodischen Systems der Elemente, ausgenommen Magnesium,
$Y^1$ Alkyl-, Cycloalkyl-, Aryl-, Alkoxy-, Cycloalkoxy- und Aryloxyrest,
$Z^1$ Alkohol,
$Z^2$ Ether, tertiäres Amin und tertiäres Phosphin,
e $0{,}2 \leqq e < 1$,
f 1, 2 und 3,
j 1, 2, 3 und 4,
g,h ganze Zahlen ≧ 1,
i 0 und ganze Zahl ≧ 1,

mit der Maßgabe,

(iii) $h + i = g$ (Oxidationszahl von M);

oder

(2) mindestens eine Vanadiummagnesiumverbindung der allgemeinen Formeln IIIa bis IIIc,

$[VX_3Z^1{}_d]_e \cdot (Mg_aX_bY_cZ_d)_{1-e}$ (IIIa)
$(VOX_{3-f}Y^1_f)_e \cdot (Mg_aX_bY^1_cZ^2_d)_{1-e}$ (IIIb)
$(VX_{4-j}Y^1_j)_e \cdot (Mg_aX_bY^1_cZ^2_d)_{1-e}$ (IIIc)

worin die Variablen X, Y, Z, $Z^1$, $Z^2$ und $Y^1$ sowie die Indices a, b, c, d, e, f und j die vorstehend angegebene Bedeutung haben;

oder

(3) mindestens eine Vanadiummagnesiumverbindung der allgemeinen Formeln IIIa bis IIIc zusammen mit mindestens einer Magnesiumverbindung der allgemeinen Formel I, mindestens einem

Magnesiumacetylacetonat und/oder mindestens einer Vanadiumverbindung der allgemeinen Formeln IIa bis IIf
verwendet.

**2.** Die Vanadium und Magnesium enthaltende Komponente nach Anspruch 1, dadurch gekennzeichnet, daß man noch zusätzlich aus Lösung(en) oder in Substanz
- mindestens eine Borverbindung der allgemeinen Formel IV

$BX^1_k Y^1_l R_m$ (IV),

worin die Variablen die folgende Bedeutung haben:
$X^1$ Chlor, Brom und Wasserstoff,
$Y^2$ Alkoxy-, Cycloalkoxy-, Aryloxy- und Aminorest,
R $C_1$- bis $C_{18}$-Alkyl-, $C_5$- bis $C_{20}$-Cycloalkyl- und $C_6$- bis $C_{20}$-Arylrest,
k,m 0 oder ganze Zahlen $\geqq 1$,
l ganze Zahl $\geqq 1$,
mit der Maßgabe:
(iv) $k+l+m = 3$;
- mindestens ein Acetylacetonat eines Kations M der 2. und 3. Hauptgruppe des Periodischen Systems der Elemente, ausgenommen Magnesium;
- mindestens eine Siliciumverbindung der allgemeinen Formel V

$SiX^1_k Y^2_l R_m$ (V),

worin die Indices und die Variablen die bei der allgemeinen Formel IV angegebene Bedeutung haben, mit der Maßgabe:
(v) $k+l+m = 4$;
und/oder
- mindestens eine Siliciumverbindung der allgemeinen Formel VI

$R^1_3\,Si\text{-}(E)_n\text{-}R^1$ (VI)

worin der Index und die Variablen die folgende Bedeutung haben:
$R^1$ Wasserstoff, Chlor und Brom sowie Alkyl-, Cycloalkyl-, Aryl-, Alkoxy-, Cycloalkoxy- und Aryloxyrest,
n eine ganze Zahl von 1 bis 5,
E mindestens ein Rest der allgemeinen Formeln VIa bis VIc

$-SiR^1_2-$ (VIa)   $-OSiR^1_2-$ (VIb)

$-\overset{R^2}{N}-SiR^1_2-$ (VIc)

worin $R^2$ für Wasserstoff und Alkyl-, Cycloalkyl- und Arylrest steht;
aufträgt.

**3.** Die Vanadium und Magnesium enthaltende Komponente nach Anspruch 1 oder 2, dadurch gekennzeichnet, daß man noch zusätzlich aus Lösung(en) oder in Substanz mindestens eine Titanverbindung der allgemeinen Formel VIIa bis VIId,

$$TiX_4 \qquad TiX_3 \cdot Z_d \qquad TiX_3 \cdot 1/3\ AlX_3 \cdot Z_d$$

(VIIa) (VIIb) (VIIc)

$(Ti_{4-j} \bullet Y^1_j)_e \bullet (M^1_g X_h Y^1_i Z^2_d)_{1-e}$ (VIId)

worin die Variablen X und Z sowie der Index d die bei der allgemeinen Formel I angegebene Bedeutung und die Variablen $Y^1$ und $Z^2$ sowie die Indices e, j, g, h und i die bei den allgemeinen Formeln IIa bis IIf angegebene Bedeutung haben und worin $M^1$ für das Kation eines Metalls der 2. und 3. Hauptgruppe des Periodischen Systems der Elemente, inclusive Magnesium, steht, aufträgt.

**4.** Die Vanadium und Magnesium enthaltende Komponente nach einem der Ansprüche 1 bis 3, dadurch gekennzeichnet, daß man die Komponente als feinteiligen Feststoff isoliert und trocknet.

**5.** Die Vanadium und Magnesium enthaltende Komponente nach einem der Ansprüche 1 bis 4, dadurch gekennzeichnet, daß man zusätzlich noch aus Lösung oder in Substanz mindestens eine metallorganische Verbindung der allgemeinen Formel VIII,

$M^2R_pX^1_q$ -p (VIII)

worin die Variablen $X^1$ und R die bei der allgemeinen Formel IV angegebene Bedeutung und die Variable $M^2$ sowie die Indices die nachstehend angegebene Bedeutung haben:

$M^2$ Metall der 1. bis 3. Hauptgruppe des Periodischen Systems der Elemente,
p ganze Zahl $\geq$ 1 und
q (Oxidationszahl von $M^2$) - p;

aufträgt.

**6.** Die Vanadium und Magnesium enthaltende Komponente nach Anspruch 5, dadurch gekennzeichnet, daß man die Komponente als feinteiligen Feststoff isoliert und trocknet.

**7.** Ziegler-Katalysatorsystem, herstellbar durch Vermischen
(1) mindestens einer Vanadium und Magnesium enthaltenden Komponente gemäß einem der Ansprüche 1 bis 6 mit
(2) mindestens einer aluminiumorganischen Verbindung und
(3) mindestens einem organischen Cokatalysator.

**8.** Ethylenhomopolymerisate und -copolymerisate mit untergeordneten Mengen an einpolymerisierten $C_3$- bis $C_8$-$\alpha$-Monoolefinen, herstellbar durch Homo- oder Copolymerisation des oder der betreffenden Monomeren bei Temperaturen von 0 bis 200 °C und Drücken von 0,1 bis 200 bar mittels eines Ziegler-Katalysatorsystem gemäß Anspruch 7.

**9.** Ethylenhomopolymerisate und -copolymerisate nach Anspruch 8 mit einer Dichte oberhalb 0,935 g/cm$^3$, einer intrinsischen Viskosität [$\eta$] größer als 1,9 dl/g und/oder einem "high-load melt index" HLMI bei 190 °C und 2, 16 kg Belastung von mehr als 5 g/min und einer ausgesprochen breiten Molekulargewichtsverteilung.

**Patentansprüche für folgenden Vertragsstaat : ES**

**1.** Verfahren zur Herstellung einer Vanadium und Magnesium enthaltenden Komponente für ein Ziegler-Katalysatorsystem, bei welchem man mindestens eine Magnesiumverbindung und mindestens eine Vanadiumverbindung nacheinander in beliebiger Reihenfolge oder gleichzeitig aus Lösung(en) oder in Substanz auf einen festen, feinteiligen, inerten organischen oder anorganischen Träger aufträgt, dadurch gekennzeichnet, daß man hierbei entweder
(1) mindestens eine Magnesiumverbindung der allgemeinen Formel I

$Mg_aX_bY_cZ_d$ (I),

worin die Indices und die Variablen die folgende Bedeutung haben:

- X Chlor und Brom,
- Y Wasserstoff und Hydroxyl-, Alkyl-, Cycloalkyl-, Aryl-, Alkoxy-, Cycloalkoxy- und Aryloxyrest,
- Z Alkohol, Ether, Aldehyd, Ester, Keton, Amin und organisches Phosphin,
- a,b ganze Zahlen $\geqq 1$,
- c 0 und ganze Zahl $\geqq 1$,
- d 0 oder eine ganze Zahl von 1 bis 6,

mit den Maßgaben:

(i) $b + c = 2a$ und

(ii) $d \neq 0$, wenn $c = 0$;

und/oder mindestens ein Magnesiumacetylacetonat sowie mindestens eine Vanadiumverbindung der allgemeinen Formeln IIa bis IIf,

$VOX_3$ (IIa) $VX_4$ (IIb) $VX_3Z^1{}_d$ (IIc)

$[VX_3Z^1d]_e \cdot (M_gX_bY_cZ_d)_{1-e}$ (IId)

$(VOX_{3-f}Y^1_f)_e \cdot (M_gX_xY^1_iZ^2_d)_{1-e}$ (IIe)

$(VX_{4-j}Y^1_j)_e \cdot (M_gX_hY^1_iZ^2_d)_{1-e}$ (IIf)

worin die Variablen X, Y und Z sowie der Index d die bei der allgemeinen Formel I angegebene Bedeutung und die übrigen Indices und Variablen die nachstehend angegebene Bedeutung haben:

- M Kation eines Metalls der 2. und 3. Hauptgruppe des Periodischen Systems der Elemente, ausgenommen Magnesium,
- $Y^1$ Alkyl-, Cycloalkyl-, Aryl-, Alkoxy-, Cycloalkoxy- und Aryloxyrest,
- $Z^1$ Alkohol,
- $Z^2$ Ether, tertiäres Amin und tertiäres Phosphin,
- e $0{,}2 \leqq e < 1$,
- f 1, 2 und 3,
- j 1, 2, 3 und 4,
- g,h ganze Zahlen $\geqq 1$,
- i 0 und ganze Zahl $\geqq 1$,

mit der Maßgabe,

(iii) $h + i = g \cdot$ (Oxidationszahl von M);

oder

(2) mindestens eine Vanadiummagnesiumverbindung der allgemeinen Formeln IIIa bis IIIc,

$[VX_3Z^1{}_d]_e \cdot (Mg_aX_bY_cZ_d)_{1-e}$ (IIIa)

$(VOX_{3-f}Y^1_f)_e \cdot (Mg_aX_bY^1_cZ^2_d)_{1-e}$ (IIIb)

$(VX_{4-j}Y^1_j)_e \cdot (Mg_aX_bY^1_cZ^2_d)_{1-e}$ (IIIc)

worin die Variablen X, Y, Z, $Z^1$, $Z^2$ und $Y^1$ sowie die Indices a, b, c, d, e, f und j die vorstehend angegebene Bedeutung haben;

oder

(3) mindestens eine Vanadiummagnesiumverbindung der allgemeinen Formeln IIIa bis IIIc zusammen mit mindestens einer Magnesiumverbindung der allgemeinen Formel I, mindestens einem Magnesiumacetylacetonat und/oder mindestens einer Vanadiumverbindung der allgemeinen Formeln IIa bis IIf

verwendet.

**2.** Das Verfahren nach Anspruch 1, dadurch gekennzeichnet, daß man noch zusätzlich aus Lösung(en) oder in Substanz

- mindestens eine Borverbindung der allgemeinen Formel IV

$BX^1_k\, Y^2_l\, R_m$ (IV),

worin die Variablen die folgende Bedeutung haben:
$X^1$ Chlor, Brom und Wasserstoff,
$Y^2$ Alkoxy-, Cycloalkoxy-, Aryloxy- und Aminorest,
R $C_1$- bis $C_{18}$-Alkyl-, $C_5$- bis $C_{20}$-Cycloalkyl- und $C_6$- bis $C_{20}$-Arylrest,
k,m 0 oder ganze Zahlen $\geqq 1$,
l ganze Zahl $\geqq 1$,
mit der Maßgabe:
(iv) $k+l+m = 3$;
- mindestens ein Acetylacetonat eines Kations M der 2. und 3. Hauptgruppe des Periodischen Systems der Elemente, ausgenommen Magnesium;
- mindestens eine Siliciumverbindung der allgemeinen Formel V

$SiX^1_k\, Y^2_l\, R_m$ (V),

worin die Indices und die Variablen die bei der allgemeinen Formel IV angegebene Bedeutung haben, mit der Maßgabe:
(v) $k+l+m = 4$;
und/oder
- mindestens eine Siliciumverbindung der allgemeinen Formel VI

$R^1_3\, Si\text{-}(E)n\text{-}R^1$ (VI)

worin der Index und die Variablen die folgende Bedeutung haben:
$R^1$ Wasserstoff, Chlor und Brom sowie Alkyl-, Cycloalkyl-, Aryl-, Alkoxy-, Cycloalkoxy- und Aryloxyrest,
n eine ganze Zahl von 1 bis 5,
E mindestens ein Rest der allgemeinen Formeln VIa bis VIc

$-SiR^1_2-$ (VIa) $-OSiR^1_2-$ (VIb)

$-N(R^2)-SiR^1_2-$ (VIc)

worin $R^2$ für Wasserstoff und Alkyl-, Cycloalkyl- und Arylrest steht;
aufträgt.

**3.** Das Verfahren nach Anspruch 1 oder 2, dadurch gekennzeichnet, daß man noch zusätzlich aus Lösung(en) oder in Substanz mindestens eine Titanverbindung der allgemeinen Formel VIIa bis VIId,

$TiX_4$ (VIIa) $TiX_3 \cdot Z_d$ (VIIb) $TiX_3 \cdot 1/3\ AlX_3 \cdot Z_d$ (VIIc)

$(Ti_{4-j} \bullet Y^1_j)_e \bullet (M^1_g\, X_h Y^1_i\, Z^2_d)_{1-e}$ (VIId)

worin die Variablen X und Z sowie der Index d die bei der allgemeinen Formel I angegebene Bedeutung und die Variablen $Y^1$ und $Z^2$ sowie die Indices e, j, g, h und i die bei den allgemeinen Formeln IIa bis IIf angegebene Bedeutung haben und worin $M^1$ für das Kation eines Metalls der 2. und

3. Hauptgruppe des Periodischen Systems der Elemente, inclusive Magnesium, steht, aufträgt.

**4.** Das Verfahren nach einem der Ansprüche 1 bis 3, dadurch gekennzeichnet, daß man die Komponente als feinteiligen Feststoff isoliert und trocknet.

**5.** Das Verfahren nach einem der Ansprüche 1 bis 4, dadurch gekennzeichnet, daß man zusätzlich noch aus Lösung oder in Substanz mindestens eine metallorganische Verbindung der allgemeinen Formel VIII,

$M^2R_pX^1_{q-p}$ (VIII)

worin die Variablen $X^1$ und R die bei der allgemeinen Formel IV angegebene Bedeutung und die Variable $M^2$ sowie die Indices die nachstehend angegebene Bedeutung haben:

$M^2$ Metall der 1. bis 3. Hauptgruppe des Periodischen Systems der Elemente,
p ganze Zahl ≧ 1 und
q (Oxidationszahl von $M^2$) - p;

aufträgt.

**6.** Das Verfahren nach Anspruch 5, dadurch gekennzeichnet, daß man die Komponente als feinteiligen Feststoff isoliert und trocknet.

**7.** Verfahren zur Herstellung eines Ziegler-Katalysatorsystems durch Vermischen
(1) mindestens einer Vanadium und Magnesium enthaltenden Komponente mit
(2) mindestens einer aluminiumorganischen Verbindung und
(3) mindestens einem organischen Cokatalysator,
dadurch gekennzeichnet, daß man hierbei eine gemäß einem der Ansprüche 1 bis 6 hergestellte Vanadium und Magnesium enthaltende Komponente verwendet.

**8.** Verfahren zur Herstellung von Ethylenhomopolymerisaten und -copolymerisaten mit untergeordneten Mengen an einpolymerisierten $C_3$- bis $C_8$-$\alpha$-Monoolefinen durch Homo- oder Copolymerisation des oder der betreffenden Monomeren bei Temperaturen von 0 bis 200 °C und Drücken von 0,1 bis 200 bar mittels eines Ziegler-Katalysatorsystems, dadurch gekennzeichnet, daß man hierbei ein gemäß Anspruch 7 hergestelltes Ziegler-Katalysatorsystem verwendet.

**9.** Das Verfahren nach Anspruch 8, dadurch gekennzeichnet, daß die Ethylenhomopolymerisate und -copolymerisate eine Dichte oberhalb 0,935 g/cm$^3$, eine intrinsische Viskosität [$\eta$] größer als 1,9 dl/g und/oder einen "high-load melt index" HLMI bei 190 °C und 2, 16 kg Belastung von mehr als 5 g/min und eine ausgesprochen breite Molekulargewichtsverteilung aufweisen.